# EUROPEAN PATENT APPLICATION

(11) **EP 4 411 594 A1**
(43) Date of publication of application: **07.08.2024**
(21) Application number: 22875357.0
(22) Date of filing: 20.01.2022
(51) Int. Cl.: G06M 11/00, A01K 61/95

(54) **COUNTING DEVICE, COUNTING METHOD, AND RECORDING MEDIUM**

(30) Priority: 30.09.2021 JP 2021160243
(71) Applicant: NEC Corporation, 108-8001 Tokyo (JP)
(72) Inventor: KOBAYASHI Jun, Tokyo 108-8001 (JP)
(74) Representative: Betten & Resch
(86) International application number: PCT/JP2022/001963
(87) International publication number: WO 2023/053473

(57) **Abstract**

A detection unit 41 of a counting device 40 executes a detection process for detecting movable bodies to be counted from each of a plurality of frame images that constitute a captured video in which the movable bodies to be counted are included. A selection unit 42 selects, among the plurality of frame images constituting the captured video, a portion of the frame images as selected images such that the capturing order is intermittent. In addition, the selection unit 42 displays, in a display device, each of the selected images in an aspect where detection result information indicating the movable bodies to be counted detected by the detection process are superimposed on the selected image. A correction unit 43 receives, as correction information, information for correcting the result of the detection process displayed in each of the selected images. A counting unit 44 counts the movable bodies to be counted included in the captured video, by using the result of the detection process corrected in accordance with the correction information.

## Description

### Technical Field

The present invention relates to a technique for counting a moving object to be counted from a captured moving image.

### Background Art

In aquaculture, it is important to grasp the number of fish in a cage in the management of aquaculture business. However, in many cases, the number of fish in the cage is not accurately grasped. For example, in order to grasp the number of fish, the number of fish to be released into the cage may be visually counted by a person, but since it is visually counted by a person, the counting lacks accuracy. When a fish escapes from the cage due to a disaster or the like, the number of the escaping fish is unknown in most cases. Therefore, even if the number of fish to be released into the cage is counted, the number of fish in the cage is unknown thereafter.

Therefore, development of a technique for photographing fish in a cage and counting the number of fish in the cage using the captured image has been advanced. For example, PTL 1 (WO 2021/060077 A1) discloses a technique of detecting fish from a captured image obtained by capturing the fish in a cage and counting the number of the detected fish.

### Citation List

### Patent Literature

PTL 1: WO 2021/060077 A1

### Summary of Invention

### Technical Problem

As disclosed in PTL 1 (WO 2021/060077 A1), in a case where fish is detected from a captured image, if the fish captured in the captured image is unclear due to the level of light, turbidity of water, overlapping of fish, or the like, the fish may not be accurately detected from the captured image. In consideration of such a situation, there is a case where a person visually confirms the result of the detection processing of detecting fish from the captured image.

In the case of counting fish as a moving object, fish is often captured by moving images. When the detection processing is executed for each of the frame images constituting the moving image, the workload of the worker who visually checks the result of the detection processing becomes very large. That is, in order to improve the accuracy of the counting result, the detection processing may be executed for each of all the frame images constituting the moving image. In a case where the detection processing is performed for all the frame images constituting the moving image in this manner, the number of frame images to be subjected to the detection processing is very large, and thus the number of frame images for which the result of the detection processing is confirmed is also large. As a result, the workload of the worker who visually checks the result of the detection processing becomes very large. Since the frame rate of the moving image in which the fish is captured in order to count the number of fish tends to increase in order to improve the accuracy of the counting result, the number of frame images on which the detection processing is performed increases, and accordingly, the workload of the worker who confirms the result of the detection processing tends to further increase.

The present invention has been devised in order to solve the above problems. That is, a main object of the present invention is to provide a technique for reducing a burden of checking work of confirming a result of detection processing of detecting a moving object to be counted from a captured moving image while preventing a decrease in accuracy of a counting result of counting the moving object to be counted.

### Solution to Problem

In order to achieve the above object, as one aspect of a counting device according to the present invention, the counting device including:
a detection unit that executes detection processing of detecting a moving object to be counted from each of a plurality of frame images constituting a captured moving image in which the moving object to be counted is captured;
a selection unit that selects some of the frame images, as a selection image, in such a way that capturing order is intermittent among the plurality of frame images constituting the captured moving image, and displays the selection image on a display device in a mode in which detection result information indicating the moving object to be counted that has been detected in the detection processing is superimposed;
a correction unit that receives, as correction information, a command to delete the detection result information superimposed on the displayed selection image or a command to add detection result information indicating the moving object to be counted to the selection image;
a counting unit that counts the moving objects to be counted appearing in the captured moving image by using a result of the detection processing corrected in accordance with the correction information; and
an output unit that outputs information indicating the counted number of the moving objects to be counted as a counting result.

As one aspect of a counting method according to the present invention, the counting method including:
executing detection processing of detecting a moving object to be counted from each of a plurality of frame images constituting a captured moving image in which the moving object to be counted is captured;
selecting some of the frame images, as a selection image, in such a way that capturing order is intermittent among the plurality of frame images constituting the captured moving image, and displaying the selection image on a display device in a mode in which detection result information indicating the moving object to be counted that has been detected in the detection processing is superimposed;
receiving, as correction information, a command to delete the detection result information superimposed on the displayed selection image or a command to add detection result information indicating the moving object to be counted to the selection image;
counting a plurality of the moving objects to be counted appearing in the captured moving image by using a result of the detection processing corrected in accordance with the correction information; and
outputting information indicating the counted number of the moving objects to be counted as a counting result.

Further, as one aspect of a non-transitory recording medium according to the present invention, the recording medium records a program for causing a computer to execute:
executing detection processing of detecting a moving object to be counted from each of a plurality of frame images constituting a captured moving image in which the moving object to be counted is captured;
selecting some of the frame images, as a selection image, in such a way that capturing order is intermittent among the plurality of frame images constituting the captured moving image, and displaying the selection image on a display device in a mode in which detection result information indicating the moving object to be counted that has been detected in the detection processing is superimposed;
receiving, as correction information, a command to delete the detection result information superimposed on the displayed selection image or a command to add detection result information indicating the moving object to be counted to the selection image;
counting a plurality of the moving objects to be counted appearing in the captured moving image by using a result of the detection processing corrected in accordance with the correction information; and
outputting information indicating the counted number of the moving objects to be counted as a counting result.

### Advantageous Effects of Invention

According to the present invention, it is possible to provide a technique of reducing a burden of checking work of confirming a result of detection processing of detecting a moving object to be counted from a captured moving image while preventing a decrease in accuracy of a counting result of counting the moving object to be counted.

### Brief Description of Drawings

[Fig. 1] Fig. 1 is a block diagram for explaining a configuration of a counting device according to a first example embodiment of the present invention.
[Fig. 2] Fig. 2 is a diagram for explaining an example of a situation in which moving objects to be counted are counted.
[Fig. 3] Fig. 3 is a diagram illustrating a specific example of a moving object to be counted appearing in a frame image constituting a captured moving image.
[Fig. 4] Fig. 4 is a diagram illustrating an example of processing of selecting some frame images from the frame images constituting a captured moving image.
[Fig. 5] Fig. 5 is a diagram illustrating an example of a frame image on which detection processing of detecting a moving object to be counted is executed.
[Fig. 6] Fig. 6 is a diagram for explaining an example of work of inputting correction information.
[Fig. 7] Fig. 7 is a flowchart for explaining an example of an operation related to processing of counting moving objects to be counted in the counting device of the first example embodiment.
[Fig. 8] Fig. 8 is a diagram illustrating an example of confidence level display data.
[Fig. 9] Fig. 9 is a diagram for explaining a region of a frame image.
[Fig. 10] Fig. 10 is a diagram for explaining an example of a target object in a frame image.
[Fig. 11] Fig. 11 is a diagram for explaining an example of another target object in a frame image.
[Fig. 12] Fig. 12 is a block diagram for explaining a configuration of a counting device of another example embodiment according to the present invention.
[Fig. 13] Fig. 13 is a flowchart for explaining an example of an operation in a counting device of another example embodiment.

### Example Embodiment

Hereinafter, an example embodiment according to the present invention will be described with reference to the drawings.

### <First Example Embodiment>

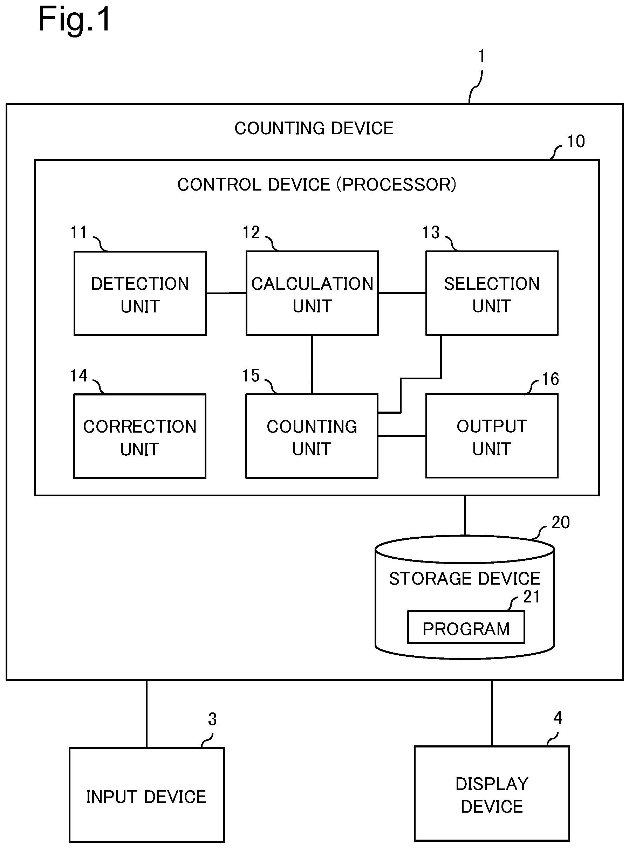

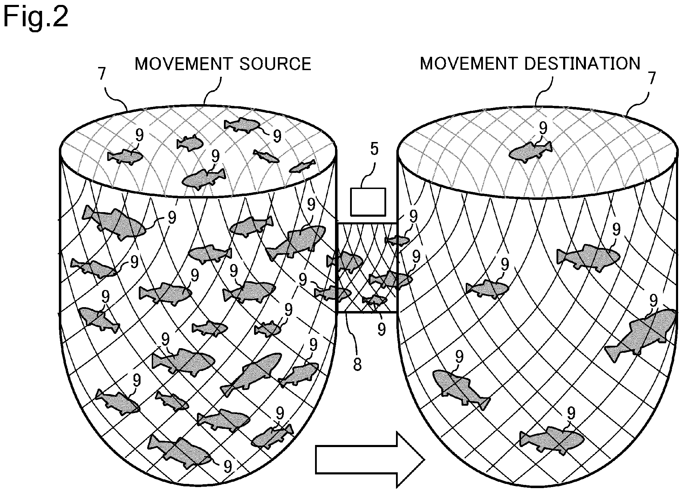

Fig. 1 is a block diagram illustrating a configuration of a counting device according to a first example embodiment of the present invention. A counting device 1 is a computer device, and has a function of counting moving objects to be counted using a captured moving image in which the moving objects to be counted are captured. In the first example embodiment, the moving object to be counted is a fish cultured in a cage. Here, the cage (hereinafter, also referred to as a movement source) in which the fish to be counted are cultivated and the cage (hereinafter, also referred to as a movement destination) in which the fish are not yet put are connected via a passage, and the fish to be transferred from the movement source to the movement destination through the passage are counted by the counting device 1. That is, as illustrated in Fig. 2, a fish 9 moving from a cage 7 of the movement source to the cage 7 of the movement destination through a passage 8 is captured by an imaging device 5 from the side of the passage 8 (direction intersecting the moving direction of the fish 9). The counting device 1 counts the number of fish 9 in the cage 7 using the moving image (hereinafter, also referred to as a captured moving image) captured by the imaging device 5.

The imaging device 5 is a device capable of capturing a moving image, and herein captures an image of the fish 9 that is disposed in the water and passes through the passage 8 with the image capturing direction fixed. A method of arranging the imaging device 5 in the water is not limited, and the description thereof will be omitted.

Here, an outline of a counting step of measuring the number of fish 9 will be described. First, detection processing of detecting the fish 9 to be counted from the frame image is executed for each of the frame images that are a plurality of still images constituting a captured moving image. A method for detecting the fish 9 to be counted from the frame image is not limited here, but as an example, there is a detection method using an artificial intelligence (AI) technology. In the detection method by the AI technology, a model generated by machine learning is used. The model (hereinafter, also referred to as a detection model) used in the first example embodiment is generated by machine learning of an image in which the fish 9 to be counted are captured. The detection model receives a frame image as an input, detects the fish 9 to be counted which is captured in the frame image, and outputs information indicating the detection result (hereinafter, also referred to as detection information). Depending on the cultivation method, the type of fish 9 to be counted and other types of fish may be mixed in the cage 7. In this case, not only the type of fish 9 to be counted but also the type of fish not to be counted are captured in the captured moving image of the imaging device 5. In the first example embodiment, from such a frame image in which the type of fish 9 to be counted and the type of fish not to be counted are captured in a mixed manner, a detection model for detecting the type of fish 9 to be counted is generated and used by machine learning without detecting the type of fish not to be counted.

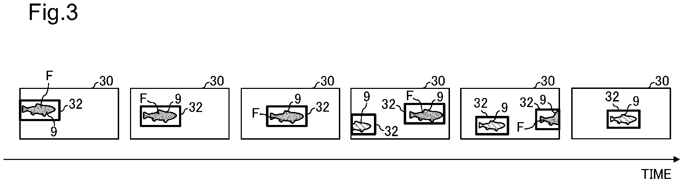

In the first example embodiment, the detection processing as described above is executed for the frame image constituting the captured moving image including the moving image from the start to the end of the transfer of the fish 9 from the movement source to the movement destination through the passage 8. Fig. 3 is an image diagram in which some frame images constituting the captured moving image are extracted and arranged in time series. In the first example embodiment, information (hereinafter, also simply referred to as a capturing order) indicating the capturing order is associated with all the frame images constituting the captured moving image by consecutive numbers in the capturing order. In the example of Fig. 3, six frame images 30 whose capturing order is continuous are illustrated. Detection processing is executed for each of the frame images 30, and a detection frame 32 surrounding an object detected to be the fish 9 to be counted is superimposed on each of the frame images 30 as detection result information that is information indicating a result of the detection processing. In each of the frame images 30 shown in Fig. 3, the left side of the frame image 30 is the movement source side, and the right side of the frame image 30 is the movement destination side.

The tracking processing is executed for the fish 9 to be counted which has detected as described above. The tracking processing is processing of tracking the same fish 9 to be counted which is captured in a plurality of frame images 30, and the movement of the same fish 9 can be detected by executing the tracking processing. Using the result of the tracking processing, the fish 9 determined to have moved in the direction from the movement source to the movement destination (in the example of Fig. 3, a direction from one (left side) to the other (right side) of the left and right edge portions facing each other in the frame image) and no longer appear in the frame image 30 (frame-out) are counted. In this manner, the fish 9 to be counted are counted. In the following description, the direction from the movement source to the movement destination (in the example of Fig. 3, the direction from the left side to the right side) is also referred to as a positive direction, and the opposite direction (that is, the direction from the movement destination to the movement source) is also referred to as a negative direction.

In the first example embodiment, it is assumed that, after the detection processing of detecting the fish 9 to be counted from the frame image 30, a checking work of checking whether the fish 9 to be counted is correctly detected by a person visually using the detection frame 32 in the frame image 30 as illustrated in Fig. 3 as a mark is performed. The counting device 1 of the first example embodiment has a configuration for reducing the burden of the checking work.

That is, as illustrated in Fig. 1, the counting device 1 of the first example embodiment includes a control device 10 and a storage device 20. The counting device 1 is connected to an input device 3 and a display device 4. The input device 3 is a device that inputs information to the counting device 1, and includes, for example, a keyboard, a mouse, a touch panel, and the like. The display device 4 is a device that displays characters, images (including video), and the like.

The storage device 20 of the counting device 1 includes a storage medium that stores data and a computer program (hereinafter, also referred to as a program) 21. There is a plurality of types of storage devices such as a magnetic disk device and a semiconductor memory element, and there are a plurality of types of semiconductor memory elements such as a random access memory (RAM) and a read only memory (ROM). The type of the storage device 20 included in the counting device 1 is not limited to one. A computer device is often provided with a plurality of types of storage devices. Here, the type and number of storage devices 20 provided in the counting device 1 are not limited, and the description thereof will be omitted. In a case where a plurality of types of storage devices 20 are provided in the counting device 1, they are collectively referred to as a storage device 20.

In the first example embodiment, a computer program related to the processing of counting the fish 9 to be counted is stored in the storage device 20 as one of the programs 21. In a case where the AI technology is used in the detection processing as described above, the detection model is stored in the storage device 20 as one of the programs 21.

Furthermore, in the storage device 20, a captured moving image of the imaging device 5 including a moving image from the start to the end of the transfer of the fish 9 from the movement source to the movement destination through the passage 8 is stored in association with, for example, information indicating a capturing date and time, a situation around the cage 7, and the like.

The control device 10 includes a processor such as a central processing unit (CPU) or a graphics processing unit (GPU). The control device 10 can have various functions based on the program 21 by reading and executing the program 21 stored in the storage device 20. Here, the control device 10 includes a detection unit 11, a calculation unit 12, a selection unit 13, a correction unit 14, a counting unit 15, and an output unit 16 as functional units based on a computer program related to processing of counting the fish 9 to be counted.

The detection unit 11 executes detection processing as described above. That is, the detection unit 11 executes detection processing of detecting the fish 9 to be counted in each of the plurality of frame images 30 constituting the captured moving image (for example, a captured moving image including a moving image from the start to the end of transfer of the fish 9 from the movement source to the movement destination through the passage 8) in which the fish 9 as the moving object to be counted is captured. In a case where the fish 9 to be counted is detected in the frame image 30, the detection unit 11 superimposes the detection frame 32, which is a frame-shaped figure as illustrated in Fig. 3 surrounding the detected fish 9 to be counted, on the frame image 30 as detection result information. In the example of Fig. 3, the detection frame 32 has a rectangular shape, but the detection frame 32 may have any shape as long as it has a frame shape, and may have another shape such as an ellipse. As the detection result information, instead of the detection frame 32, a mark or the like indicating that there is an object detected as the fish 9 to be counted or in the vicinity thereof may be superimposed on the frame image.

The detection unit 11 further stores information (hereinafter, also referred to as detected object information) indicating the position and size of the object detected as the fish 9 to be counted in the frame image 30 in association with the frame identification information in the storage device 20. The frame identification information is information given to each frame image in order to identify each frame image, and for example, the capturing order as described above may be used as the frame identification information.

The calculation unit 12 executes tracking processing on the fish 9 to be counted which is detected by the detection processing by the detection unit 11. Here, the method of the tracking processing is not limited, and the description thereof will be omitted.

In the first example embodiment, the tracking processing is executed twice in the counting step from the detection processing by the detection unit 11 to counting the fish 9 to be counted and outputting information indicating the number of the counted fish 9 as the counting result. The first tracking processing is executed as preprocessing for processing by the selection unit 13. The second tracking processing is executed to acquire information used in the counting processing by the counting unit 15.

The selection unit 13 has a function of reducing the checking work for confirming the result of the detection processing as described above. That is, the selection unit 13 causes the display device 4 to display the frame image on which the detection result information is superimposed as a still image so that the worker visually confirms whether the object detected as the fish to be counted by the detection processing from the frame image is the correct fish to be counted. In the first example embodiment, in order to reduce the checking work of the worker, instead of displaying the frame images constituting the captured moving image one by one without missing the frame images in the capturing order on the display device 4, some frame images of the captured moving image are displayed on the display device 4 such that the capturing order is intermittent. The selection unit 13 has a function of selecting the frame image to be displayed as a selection image.

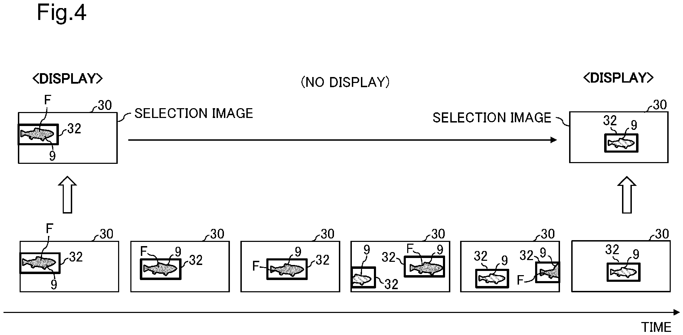

In the first example embodiment, even if some frame images are selected and displayed so that the capturing order is intermittent from the captured moving image, the selection unit 13 selects the selection image as follows in order to prevent a decrease in accuracy of the counting result due to failure of checking of the result of the detection processing. That is, the selection unit 13 selects a frame image (selection image) to be displayed on the display device 4 such that each of the plurality of fish 9 to be counted moving in the passage 8 is displayed on the display device 4 at least once. That is, in the first example embodiment, the selection unit 13 first calculates the average number of frame images from when the fish 9 to be counted appears in the frame image until the fish 9 move in the positive direction toward the movement destination and do not appear any more in the frame image by using the result of the tracking processing by the calculation unit 12. In other words, the selection unit 13 calculates the average number of frame images (the number of frame images (number of frames) in which the same fish 9 to be counted appears) from the time when the fish 9 to be counted frames in to the time when the fish 9 to be counted frames out. As a specific example, it is assumed that Fig. 3 illustrates an average movement of the fish 9 to be counted. In this case, the average number of frame images 30 from the frame-in to the frame-out of the fish 9 to be counted is 5 frames (for example, see the fish 9 denoted by the symbol "F" in Fig. 3). Therefore, in this example, as illustrated in Fig. 4, if the frame images 30 constituting the captured moving image are displayed so that the capturing order is intermittent every 5 frames, it is considered that the fish 9 to be counted are each displayed on the display device 4 once.

That is, the selection unit 13 selects, as the selection image, the frame images 30 in the capturing order for each number based on the average number of frame images 30 from the frame-in to the frame-out of the fish 9 to be counted, and displays the selection image on the display device 4. In the selection image selected and displayed in this manner, a checking work of checking the result of the detection processing as described above is performed. The display switching for switching the display of the selection image to the next selection image is executed by the selection unit 13 when, for example, a worker performing checking work operates the input device 3 and a display switching request of the frame image is input to the counting device 1.

In the first example embodiment, the frame image on which the detection processing is executed is a frame image constituting a captured moving image including a moving image from the start to the end of transfer of the fish 9 from the cage 7 as the movement source to the cage 7 as the movement destination through the passage 8. In consideration of this, for example, the selection unit 13 sets, as the first selection image, the frame image 30 in which the fish 9 to be counted is first detected in the captured moving image, and then sequentially displays the selection images selected as described above on the display device 4. Of course, in the counting device 1, it is possible to cause the display device 4 to display a selection image designated by the worker's operation on the input device 3 among the selection images selected by the selection unit 13.

In a case where the selection image selected by the selection unit 13 is displayed on the display device 4, and information for correcting the result of the detection processing (hereinafter, also referred to as correction information) is input to the counting device 1 by the operation of the input device 3, the correction unit 14 corrects the result of the detection processing according to the correction information.

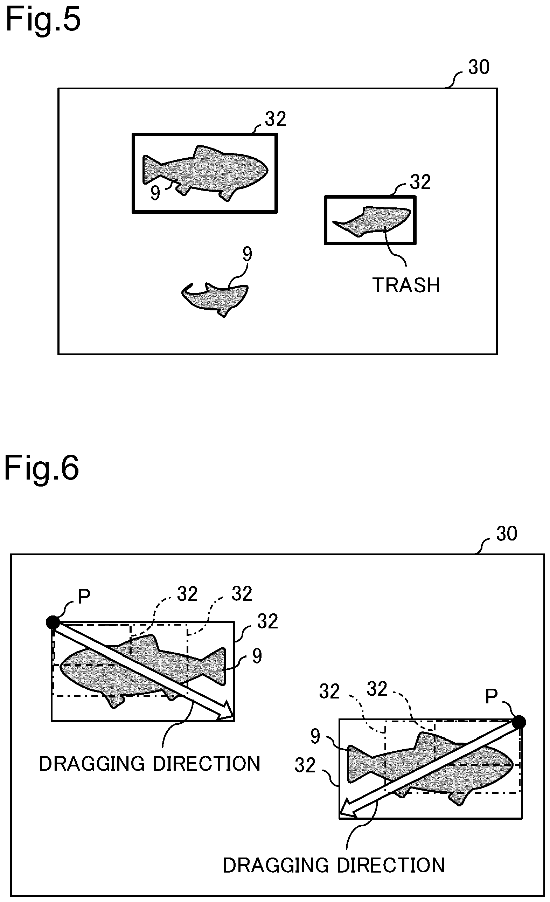

For example, Fig. 5 is a diagram for explaining an example of the frame image 30 on which the detection processing has been executed. In the example of Fig. 5, in the frame image 30, it is clearly indicated that two objects are detected as fish to be counted by the detection frame 32 as the detection result information. However, it is assumed that one of these two objects is the correct fish 9 to be counted, and the other object is, for example, dust such as wakame (dust erroneously detected as the fish to be counted because the shape of the captured image resembles a fish) and is not the fish 9 to be counted. In such a case, for example, a worker operates the input device 3 to input a command (hereinafter, also referred to as a deletion request) to delete the detection frame 32 surrounding the dirt. The correction unit 14 receives the deletion request as the correction information, and deletes the detection frame 32 requested to be deleted from the frame image 30 according to the deletion request. The correction unit 14 corrects the result of the detection processing by deleting, from the storage device 20, the detected object information relevant to the object surrounded by the detection frame 32 for which the deletion request has been made.

In the example of Fig. 5, it is assumed that the fish 9 (hereinafter, the fish are also referred to as detection-missed fish) that has not been detected as a fish to be counted is shown in the frame image 30 although the fish is a fish to be counted. In this case, since the detection-missed fish 9 has not been detected by the detection processing, the detection-missed fish 9 is not surrounded by the detection frame 32. When the worker finds such a detection-missed fish 9, for example, the worker inputs a command (hereinafter, also referred to as an addition request) to add the detection frame 32 surrounding the detection-missed fish 9 to the frame image 30 to the counting device 1 by the operation of the input device 3. The correction unit 14 receives the addition request as correction information. Then, the correction unit 14 adds the detection frame 32 requested to be added to the frame image 30 according to the addition request. The correction unit 14 corrects the result of the detection processing by writing information indicating the object surrounded by the added detection frame 32 as new detected object information in the storage device 20 in a state where the frame identification information of the frame image 30 is associated.

As described above, in the captured moving image in which the fish 9 to be counted is captured, the counting unit 15 refers to the result of the tracking processing and counts the fish 9 that have moved in the direction from the movement source to the movement destination and are determined not to appear in the frame image (frame-out). In the first example embodiment, as described above, after the detection processing is executed for each of the frame images constituting the captured moving image, the checking work of confirming the result of the detection processing is performed. The result of the detection processing may be corrected by this checking work. Therefore, in the first example embodiment, after the work of confirming the result of the detection processing is completed, execution of the tracking processing by the calculation unit 12 is instructed by the operation of the input device 3 by the worker, for example, and the calculation unit 12 executes the tracking processing on the fish 9 to be counted in the captured moving image according to the instruction. After detecting that the calculation unit 12 has executed the tracking processing after the checking work, the counting unit 15 counts the fish 9 to be counted with reference to the result of the tracking processing. In other words, the counting unit 15 counts the moving objects to be counted included in the captured moving image, by using the result of the detection processing corrected in accordance with the correction information.

By the way, although the number is small, it is conceivable that there are the fish 9 to be counted that return from the cage 7 at the movement destination to the passage 8 after moving to the cage 7 at the movement destination. Since the fish 9 to be counted that has returned to the passage 8 in this manner moves again from the passage 8 to the cage 7 as the movement destination, the fish 9 are redundantly counted by the counting unit 15. In view of the above, in the first example embodiment, the counting unit 15 further has a function of detecting the fish 9 to be counted moving in the negative direction returning from the movement destination to the movement source in the passage 8 with reference to the result of the tracking processing. Then, the counting unit 15 executes processing of subtracting the number of the fish 9 to be counted moving in the negative direction from the detected movement destination from the number of the fish 9 to be counted moving in the positive direction and framed out. As a result, a problem that the fish 9 to be counted are redundantly counted due to the movement of the fish 9 to be counted in the negative direction returning to the cage 7 as the movement source is prevented.

The counting unit 15 stores information indicating the number of the fish 9 to be counted which has been counted using the captured moving image of the passage 8 from the start to the end of the transfer of the fish 9 to be counted from the cage 7 as the movement source to the cage 7 as the movement destination in the storage device 20 in association with, for example, the identification information of the captured moving image on which the processing has been executed.

As described above, in the counting processing by the counting unit 15 in the first example embodiment, the information on the moving direction (in other words, the direction in which the head is facing) of the fish 9 to be counted in the passage 8 is important information for improving the accuracy of the counting result. From this, information on the moving direction of the fish 9 to be counted may be acquired as follows. For example, it is assumed that the detection-missed fish 9 is found by the worker through a checking work of checking the result of the detection processing by the detection unit 11. In this case, the detection frame 32 as the detection result information is added to the frame image 30 so as to surround the detection-missed fish 9 by the operation of the input device 3 by the worker. When the detection frame 32 is added, for example, information indicating the moving direction of the detection-missed fish 9 is included in the detection frame 32. For example, as illustrated in Fig. 6, it is assumed that the detection frame 32 can surround the fish 9 to be counted by increasing the size of the frame by dragging the detection frame 32 in a direction away from a reference point P. In this case, a rule that the detection frame 32 is added to the frame image 30 such that the reference point P is located on the head side out of the head side and the tail side of the fish 9 to be counted is defined. As a result, it is possible to detect (acquire) the moving direction of the fish 9 to be counted based on information indicating whether the reference point P is located on the movement source side or the movement destination side in the detection frame 32.

The output unit 16 outputs information indicating the number of the fish 9 to be counted, which has been counted by the counting unit 15, as a counting result. The output unit 16 displays the counting result on the display device 4, for example. In a case where a transmission destination to transmit the counting result via the information communication network is determined, the output unit 16 may transmit the counting result to the transmission destination.

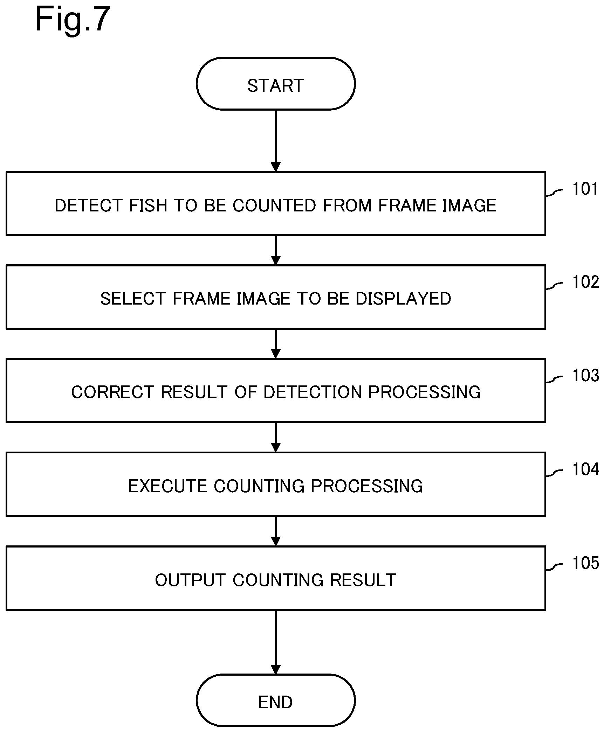

The counting device 1 in the first example embodiment is configured as described above. Next, an example of an operation related to processing of counting the fish 9 to be counted in the counting device 1 will be described with reference to Fig. 7. Fig. 7 is a flowchart illustrating an example of the operation related to the processing of counting the fish 9 to be counted in the counting device 1.

For example, first, the detection unit 11 performs detection processing of detecting the fish 9 to be counted in each of the frame images constituting the captured moving image including the moving image from the start to the end of the transfer of the fish 9 to be counted from the cage 7 as the movement source to the cage 7 as the movement destination (step 101 in Fig. 7). Then, after that, referring to the result of the tracking processing by the calculation unit 12, the selection unit 13 selects a frame image (selection image) to be displayed on the display device 4 at the time of checking work of confirming the result of the detection processing (step 102). Here, the selection unit 13 calculates the average number of frame images from the frame-in to the frame-out of the fish 9 to be counted, and selects the frame images in the capturing order for each number based on the average number of frame images as the selection image.

The selection unit 13 displays the selection image thus selected on the display device 4. Then, the checker confirms the result of the detection processing with the detection result information (detection frame 32) superimposed on the displayed selection image as a mark. As a result, when the correction information is input to the counting device 1 by the operation of the input device 3 by the checker, the correction unit 14 corrects the display of the detection result information (detection frame 32) and the detected object information in the storage device 20 according to the correction information (step 103).

Thereafter, with reference to the result of the tracking processing executed using the result of the detection processing corrected according to the correction information, the counting unit 15 executes the counting processing of counting the fish 9 to be counted that have moved from the cage 7 as the movement source to the cage 7 as the movement destination through the passage 8 (step 104). The output unit 16 displays the number of the fish 9 to be counted which has been counted in this manner on the display device 4 as a counting result or transmits the counting result to a predetermined transmission destination (step 105). In this example, the counting result is displayed by the output unit 16 after the counting processing is completed, but the output unit 16 may display the number of the fish 9 to be counted that changes from moment to moment in the middle of the counting processing by the counting unit 15 on the display device 4.

In the first example embodiment, the counting device 1 sets the frame images to be displayed on the display device 4 for the checking work of confirming the result of the detection processing as some frame images selected from among the frame images constituting the captured moving image. As a result, the counting device 1 can reduce the number of frame images for which the checking work is performed as compared with the case of performing the checking work on each of all the frame images constituting the captured moving image, so that it is possible to reduce the burden on the worker who performs the checking work.

Moreover, in the first example embodiment, the selection unit 13 selects the selection image to be displayed on the display device 4 for the checking work using the average number of frames from the frame-in to the frame-out of the fish 9 to be counted in the captured moving image. That is, in the selection unit 13, the selection unit 13 selects the selection image using the average number of frames so that each of the fish 9 to be counted is displayed once on the display device 4 even when some frame images in the captured moving image are displayed. Therefore, even if the counting device 1 is configured to select the frame image to be displayed on the display device 4 for the checking work, it is possible to prevent the confirmation failure of the result of the detection processing and to suppress the decrease in accuracy of the counting result due to the failure of confirmation.

### <Second Example Embodiment>

Hereinafter, a second example embodiment according to the present invention will be described. In the description of the second example embodiment, the same reference numerals are given to the same components as the configurations constituting the counting device of the first example embodiment, and redundant description of the common parts will be omitted.

In addition to the configuration of the first example embodiment, the counting device 1 of the second example embodiment further includes a configuration for supporting the work of the worker who performs the checking work.

That is, in the second example embodiment, the AI technology is used for the detection processing of detecting the fish 9 to be counted from the frame image, and the detection model by the AI technology not only outputs the detection information indicating that the fish 9 to be counted is detected in the frame image, but also outputs information indicating the confidence level that indicates the certainty of the fish 9 to be counted detected by the detection processing as the confidence level information. That is, the detection unit 11 outputs not only the detection information but also the confidence level information.

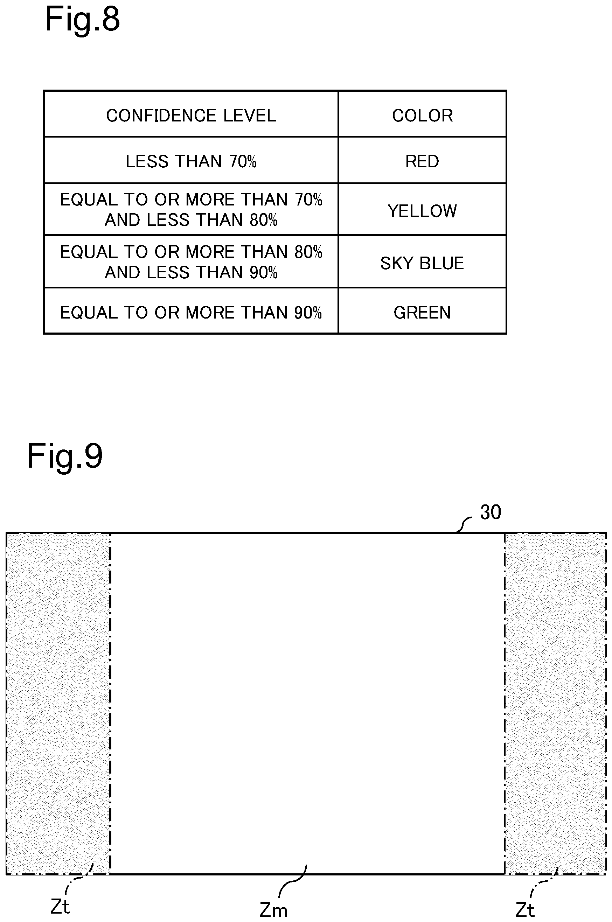

When displaying the selection image on the display device 4, the selection unit 13 varies the color of the detection frame 32 surrounding the object detected as the counting target fish according to the reliability acquired from the confidence level information. That is, relational data between the confidence level output from the detection model as illustrated in Fig. 8 and the color of the detection frame 32 is given to the storage device 20 as the confidence level display data. When displaying the selection image on the display device 4, the selection unit 13 reads the color of the detection frame 32 relevant to the acquired confidence level from the confidence level display data, and displays the detection frame 32 on the display device 4 with the read color.

The configuration of the counting device 1 of the second example embodiment other than the above is the same as the configuration of the counting device 1 of the first example embodiment.

Since the counting device 1 of the second example embodiment has the configuration of the first example embodiment, the same effects as those of the first example embodiment can be obtained. Furthermore, in the second example embodiment, information on the confidence level output from the detection model is also displayed in the selection image displayed at the time of the checking work for confirming the detection processing. Therefore, it is considered that the worker can particularly pay attention to the portion where the failure of confirmation is likely to occur such that the worker pays more attention to the object inside the detection frame 32 having a low confidence level than the object inside the detection frame 32 having a high confidence level, and the failure of confirmation is prevented and the burden on the worker can be reduced.

### <Third Example Embodiment>

Hereinafter, a third example embodiment according to the present invention will be described. In the description of the third example embodiment, the same reference numerals are given to the same components as the configurations constituting the counting device of the first or second example embodiment, and redundant description of the common parts will be omitted.

In addition to the configuration of the first or second example embodiment, the counting device 1 of the third example embodiment further includes a configuration for supporting the work of the worker who performs the checking work.

In the third example embodiment, as illustrated in Fig. 9, side edge regions Zt on the movement source side and the movement destination side and a middle region Zm other than the side edge regions Zt are set in the frame image 30. The selection unit 13 further has a function of detecting an object, as the target object, that is detected as the fish 9 to be counted by the detection unit 11 by referring to the result of the tracking processing by the calculation unit 12 and in which the region first appearing in the frame image 30 is the middle region Zm. Further, when displaying the selected frame image 30 on the display device 4, the selection unit 13 adopts a display mode in which the worker pays attention to the target object. For example, the selection unit 13 displays the detection frame 32 surrounding the target object in a more conspicuous color than the other detection frames 32 or by blinking.

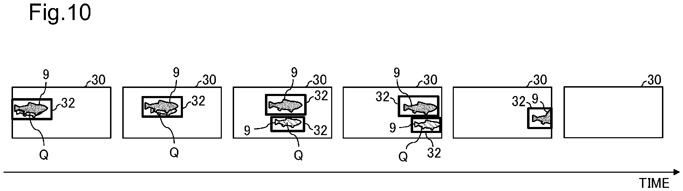

Here, as an example of the target object, for example, as the object Q illustrated in Fig. 10, an object that is almost not reflected in the frame image 30 as a shadow of the other fish 9 when being framed in, but is detected as the fish 9 to be counted in the middle region Zm after coming out of the shadow of the other fish 9 by movement is considered.

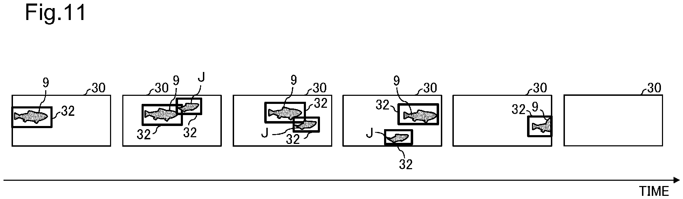

As the target object, there is an object J illustrated in Fig. 11. The object J has been detected as the fish 9 to be counted, but is actually an object that is dirt such as wakame and has not moved from the movement source side to the movement destination side. Such a target object is an object due to erroneous detection by detection processing. Since the target object is considered to include an object due to erroneous detection by such detection processing, it is considered desirable that a worker who performs checking work of the detection processing check the target object with care. Therefore, in the third example embodiment, as described above, the selection unit 13 displays the target object in a conspicuous manner when displaying the selection image on the display device 4. The configuration of the counting device 1 of the third example embodiment other than the above is the same as the configuration of the counting device 1 of the first or second example embodiment.

Since the counting device 1 of the third example embodiment has the same configuration as the counting device 1 of the first or second example embodiment, the same effects as that of the first or second example embodiments can be obtained. Furthermore, the counting device 1 of the third example embodiment can detect an object that first appears in the middle region Zm of the frame image 30 and is likely to be erroneously detected as the fish 9 to be counted as the target object. Then, the counting device 1 can clearly indicate the target object in the selection image displayed on the display device 4 for the checking work, whereby the attention of the worker of the checking work can be directed to the target object. Therefore, it is possible to suppress the failure of confirmation in the checking work by the worker, and it is possible to prevent a decrease in accuracy of the counting result due to the failure of confirmation.

### <Other example embodiments>

The present invention is not limited to the first to third example embodiments, and various example embodiments can be adopted. For example, in the first to third example embodiments, the number of intervals of the capturing order of the selection image selected by the selection unit 13 is fixed, but may be varied as follows. That is, a plurality of intermittent display modes having different intervals of the capturing order of the frame images selected as the selection image is set. For example, as the intermittent display mode, a standard mode, a speed mode in which the burden on the worker is lighter than that in the standard mode, and a careful mode in a case where it is desired to perform checking work more finely than that in the standard mode are set. In the standard mode, frame images in the capturing order for each number of average frame images from the frame-in to the frame-out of the fish 9 to be counted are selected as the selection image. As a specific example, as illustrated in Fig. 4 described above, in the standard mode, the selection image is selected such that the capturing order is intermittent every five frames.

In the speed mode, the selection image is selected such that the number of intervals in the capturing order of the selection image is larger than that in the standard mode. In the careful mode, the selection image is selected such that the number of intervals in the capturing order of the selection image is smaller than that in the standard mode.

The selection unit 13 receives, as the mode selection information, the information indicating the intermittent display mode alternatively selected from the plurality of intermittent display modes as described above by the operation of the input device 3, selects the selection image in the intermittent display mode according to the mode selection information, and causes the display device 4 to display the selection image.

In the first to third example embodiments, fish has been described as an example of the moving object, but the counting device 1 of the first to third example embodiments is also applicable to a case of counting moving objects other than fish. For example, the counting device 1 of the first to third example embodiments may be applied to count persons moving in one direction in a passage.

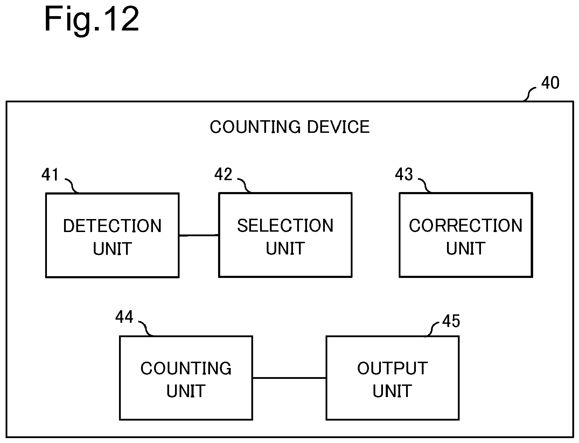

Fig. 12 is a block diagram illustrating a configuration of another example embodiment of the counting device according to the present invention. The counting device 40 illustrated in Fig. 12 is, for example, a computer device, and includes a detection unit 41, a selection unit 42, a correction unit 43, a counting unit 44, and an output unit 45 as functional units based on a computer program.

The detection unit 41 executes a detection processing for detecting moving objects to be counted from each of a plurality of frame images that constitute a captured moving image in which the moving objects to be counted are included.

A selection unit 42 selects, among the plurality of frame images constituting the captured moving image, a portion of the frame images as selection images such that the capturing order is intermittent. The selection unit 42 displays, in a display device, each of the selection images in an aspect where detection result information indicating the moving objects to be counted detected by the detection processing are superimposed on the selection image.

The correction unit 43 receives, as the correction information, a command to delete the detection result information superimposed on the displayed selection image or a command to add the detection result information indicating the moving object to be counted to the selection image.

A counting unit 44 counts the moving objects to be counted included in the captured moving image, by using the result of the detection processing corrected in accordance with the correction information.

The output unit 45 outputs information indicating the counted number of moving objects as a counting result.

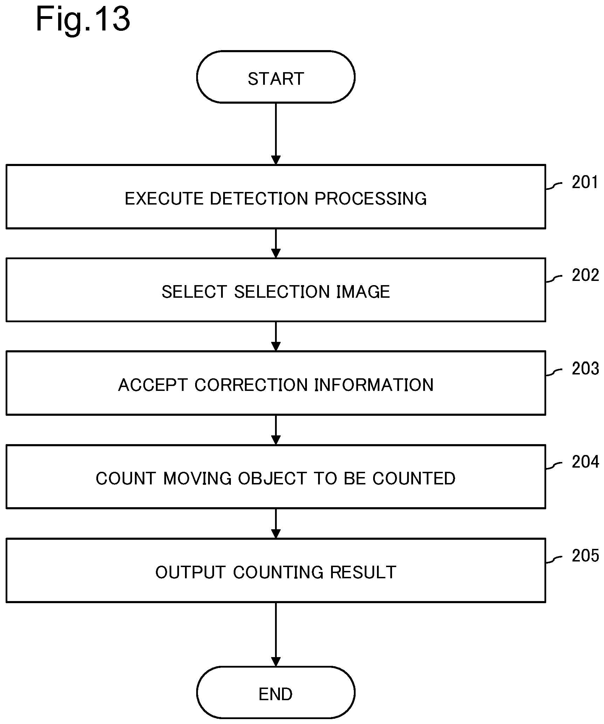

Next, an example of an operation related to processing of counting moving objects to be counted from a captured moving image in the counting device 40 will be described with reference to Fig. 13.

For example, first, the detection unit 41 executes detection processing of detecting a counting target moving object in each of a plurality of frame images constituting a captured moving image in which the counting target moving object is captured (step 201 in Fig. 13). Thereafter, the selection unit 42 selects, among the plurality of frame images constituting the captured moving image, a portion of the frame images as selection images such that the capturing order is intermittent (step 202). Furthermore, the selection unit 42 displays, in a display device, each of the selection images in an aspect where detection result information indicating the moving objects to be counted detected by the detection processing are superimposed on the selection image.

Then, the correction unit 43 receives, as the correction information, a command to delete the detection result information superimposed on the displayed selection image or a command to add the detection result information indicating the moving object to be counted to the selection image (step 203).

Thereafter, the counting unit 44 counts the moving objects to be counted included in the captured moving image, by using the result of the detection processing corrected in accordance with the correction information (step 204). Then, the output unit 45 outputs information indicating the counted number of moving objects as a counting result (step 205).

Among the plurality of frame images constituting the captured moving image, the counting device 40 as described above has a function of selecting a portion of the frame images as selection images such that the capturing order is intermittent. By performing the checking work of confirming the result of the detection processing for the frame image (selection image) selected and displayed in this manner, the burden of the checking work can be reduced as compared with the case of performing the checking work for all the frame images constituting the captured moving image. The counting device 40 performs a checking work of confirming the result of the detection processing on the selected and displayed frame image (selection image), thereby preventing a decrease in accuracy of the counting result of counting the moving objects to be counted.

This application is based upon and claims the benefit of priority from Japanese patent application No. 2021-160243, filed on September 30, 2021, the disclosure of which is incorporated herein in its entirety by reference.

### Reference Signs List

- 1, 40: counting device
- 11, 41: detection unit
- 13, 42: selection unit
- 14, 43: correction unit
- 15, 44: counting unit
- 16, 45: output unit

## Claims

1. A counting device comprising:
a detection unit that executes detection processing of detecting a moving object to be counted from each of a plurality of frame images constituting a captured moving image in which the moving object to be counted is captured;
a selection unit that selects some of the frame images, as a selection image, in such a way that capturing order is intermittent among the plurality of frame images constituting the captured moving image, and displays the selection image on a display device in a mode in which detection result information indicating the moving object to be counted that has been detected in the detection processing is superimposed;
a correction unit that receives, as correction information, a command to delete the detection result information superimposed on the displayed selection image or a command to add detection result information indicating the moving object to be counted to the selection image;
a counting unit that counts a plurality of the moving objects to be counted appearing in the captured moving image by using a result of the detection processing corrected in accordance with the correction information; and
an output unit that outputs information indicating the counted number of the moving objects to be counted as a counting result.

2. The counting device according to claim 1, further comprising
a calculation unit that executes tracking processing of tracking a same moving object to be counted captured in the plurality of frame images, wherein
the selection unit calculates, for the moving object to be counted that moves in a direction from one side to an other side of an edge portions facing each other in the frame image, an average number of the frame images in the plurality of moving objects to be counted that are required from a frame-in at which the object to be counted appears in the frame image to a frame-out at which the object to be counted does not appear any more in the frame image, using a result of the tracking processing, and selects the frame images in the capturing order for each number based on the average number of the frame images as the selection image.

3. The counting device according to claim 2, wherein
a plurality of intermittent display modes having different intervals of the capturing order of the frame images selected as the selection image is set, and
the selection unit receives information indicating the intermittent display mode alternatively selected from a plurality of the intermittent display modes as mode selection information, and selects the selection image in the intermittent display mode according to the mode selection information.

4. The counting device according to any one of claims 1 to 3, wherein
the detection result information is a frame-shaped figure surrounding an object detected as the moving object to be counted in the frame image.

5. The counting device according to claim 4, wherein
the detection unit further outputs information indicating a confidence level that indicates a certainty of the moving object to be counted that has been detected by the detection processing, and
the selection unit varies a display mode of a frame-shaped drawing, which is the detection result information to be superimposed on the selection image, according to the confidence level.

6. A counting method comprising:
executing detection processing of detecting a moving object to be counted from each of a plurality of frame images constituting a captured moving image in which the moving object to be counted is captured;
selecting some of the frame images, as a selection image, in such a way that capturing order is intermittent among the plurality of frame images constituting the captured moving image, and displaying the selection image on a display device in a mode in which detection result information indicating the moving object to be counted that has been detected in the detection processing is superimposed;
receiving, as correction information, a command to delete the detection result information superimposed on the displayed selection image or a command to add detection result information indicating the moving object to be counted to the selection image;
counting a plurality of the moving objects to be counted appearing in the captured moving image by using a result of the detection processing corrected in accordance with the correction information; and
outputting information indicating the counted number of the moving objects to be counted as a counting result.

7. A non-transitory recording medium that records a program for causing a computer to execute:
executing detection processing of detecting a moving object to be counted from each of a plurality of frame images constituting a captured moving image in which the moving object to be counted is captured;
selecting some of the frame images, as a selection image, in such a way that capturing order is intermittent among the plurality of frame images constituting the captured moving image, and displaying the selection image on a display device in a mode in which detection result information indicating the moving object to be counted that has been detected in the detection processing is superimposed;
receiving, as correction information, a command to delete the detection result information superimposed on the displayed selection image or a command to add detection result information indicating the moving object to be counted to the selection image;
counting a plurality of the moving objects to be counted appearing in the captured moving image by using a result of the detection processing corrected in accordance with the correction information; and
outputting information indicating the counted number of the moving objects to be counted as a counting result.
